# EUROPÄISCHE PATENTANMELDUNG

(11) **EP 4 467 843 A1**
(43) Veröffentlichungstag der Anmeldung: **27.11.2024**
(21) Anmeldenummer: 24177536.0
(22) Anmeldetag: 23.05.2024
(51) Int. Cl.: F16H 7/02, F16G 1/28, F16H 55/17

(54) **ZAHNRIEMENTRIEB**

(30) Priorität: 24.05.2023 DE 102023204845
(71) Anmelder: ContiTech Deutschland GmbH, 30175 Hannover (DE)
(72) Erfinder: Birkner, Nico, 30175 Hannover (DE)
(74) Vertreter: Continental Corporation

(57) **Zusammenfassung**

Die Erfindung betrifft einen Zahnriementrieb mit einem Zahnriemen (1) und wenigstens einer ersten Zahnscheibe, wobei der Zahnriemen (1) auf einer Antriebsseite (2) sich im Wesentlichen in Querrichtung (Y) erstreckende Zähne aufweist, wobei die Antriebsseite (2) zumindest im Bereich der Zähne ein in Längsrichtung (X) verlaufendes Führungselement (4) aufweist. Die Zahnscheibe weist sich im Wesentlichen in Querrichtung (Y) erstreckende Zähne und wenigstens ein Führungselement auf, wobei die Antriebsseite (2) des Zahnriemens (1) mit der wenigstens ersten Zahnscheibe korrespondierend in Eingriff ist, wodurch der Zahnriemen (1) in Querrichtung (Y) führbar ist. Das Führungselement (4) des Zahnriemens (1) und das Führungselement der Zahnscheibe weist Elemente (6) zur Übertragung einer Kraft in Längsrichtung (X) auf.

## Beschreibung

Die Erfindung betrifft einen Zahnriementrieb mit einem Zahnriemen und wenigstens einer ersten Zahnscheibe , wobei der Zahnriemen auf einer Antriebsseite sich im Wesentlichen in Querrichtung erstreckende Zähne aufweist, wobei die Antriebsseite zumindest im Bereich der Zähne ein in Längsrichtung verlaufendes Führungselement aufweist, wobei die Zahnscheibe sich im Wesentlichen in Querrichtung erstreckende Zähne und wenigstens ein Führungselement aufweist, wobei die Antriebsseite des Zahnriemens mit der wenigstens ersten Zahnscheibe korrespondierend in Eingriff ist, wodurch der Zahnriemen in Querrichtung führbar ist. Die Erfindung betrifft weiterhin einen Zahnriemen, eine Zahnscheibe und ein Fahrzeug.

Zahnriemen können wesentlich höhere Drehmomente als vergleichbare Flach- der Keilriemen übertragen, müssen aber in aller Regel durch Führungselemente gegen ein durch Querkräfte verursachtes Ablaufen von den Zahnscheiben gesichert werden. Dies ist insbesondere bei Schrägverzahnungen der Fall, die zwar ein weicheres und geräuschärmeres Laufverhalten zeigen als Geradverzahnungen, die aber eben durch die inhärente Axialkraftkomponente zum Ablaufen von Riemenscheiben neigen können. Aber auch bei geradverzahnten Zahnriementrieben sind Sicherungen gegen Ablaufen durch Querkräfte wichtig, so beispielsweise bei Zahnriemenantrieben von Zweirädern, z. B. zur Leistungsübertragung zwischen Tretkurbel und Hinterrad eines Fahrrads.

Es ist bei Zahnriemenantrieben seit langem bekannt, ein seitliches Abwandern des Riemens durch den Einfluss von Querkräften von einer Riemenscheibe durch speziell ausgebildete Bordscheiben zu verhindern, die die Antriebs- und bzw. oder Abtriebsscheibe seitlich begrenzen und als eine Art mechanischer Anschlag für den Riemen dienen.

Will man nun auf den Einsatz solcher Bordscheiben verzichten, etwa um einer zu starken Erwärmung des Riemens durch Reibung vorzubeugen und bzw. oder um Bauraum einzusparen, so muss der Riemen selbst eine gegen seitliches Verrutschen wirkende Führung im Zusammenspiel mit der jeweiligen Riemenscheibe bereitstellen.

Dazu ist es erforderlich, dass sogenannte selbstführende Riemen in ihrer Betriebsposition in Längsrichtung ausgebildete Führungselemente aufweisen, etwa in Längsrichtung des Zahnriemens angeordnete Rippen innerhalb der Zahnlücken oder längs gerichtete Vorsprünge oder Ausnehmungen, die in entsprechende Ausnehmungen oder Vorsprünge der jeweiligen Riemenscheiben eingreifen und die Längsführung bereitstellen.

Es sind aus dem Stand der Technik verschiedene Lösungen selbstführender Riemen bekannt.

Die DE 69108096 T2 offenbart hierzu ringförmige Kränze als Bordscheiben, die durch radiale Pressung auf den Oberflächen der Zahnscheibenzähne befestigt werden.

Die DE 10 2005 018 581 A1 offenbart eine als flache Blechscheibe mit einer Innenverzahnung ausgebildete Bordscheibe, die auf eine Schulter der Zahnriemenscheibe aufgepresst ist.

Die Verwendung von separaten Bordscheiben weist einerseits Nachteile bei der Montage auf, da mehrere Einzelteile in richtiger Zusammensetzung zusammengebaut werden müssen, und zeigt andererseits je nach Werkstoffpaarung eine gewisse Anfälligkeit in Bezug auf Spaltkorrosion bei Einsatz in rauen, feuchten Umgebungen.

Außerdem muss für die Bordscheiben zusätzlicher Bauraum in der Breite bereitgestellt werden, was bei gegebenem Bauraum häufig zu einer Verringerung der Riemenbreite führt, wodurch der Riemen mechanisch geschwächt wird und eine geringere Haltbarkeit aufweist und bzw. oder zur Übertragung geringerer Leistungen ausgebildet ist.

Eine andere Möglichkeit zur Führung von Zahnriemen ist die so genannte Mittenführung. Dabei sind Führungsprofile im Verzahnungsbereich vorgesehen. Die EP 2 289 792 A1 zeigt hierzu ein selbstzentrierendes System, bei dem der Riemen mit einer Vertiefung oder Nut in der Mitte seiner Verzahnung ausgebildet ist und die Zahnriemenscheibe einen mittig zwischen den Zahnflanken verlaufenden, vorspringenden Zentrierungssteg oder -flansch aufweist, der beim Umlauf in die Nut des Zahnriemens eingreift.

Ein ähnliches System offenbart die US 2018 003273 A1, bei der ebenfalls zwischen den Zahnflanken der Riemenscheibe eine ansteigende Finne zum Eingriff in eine in der Riemenverzahnung ausgebildete Nut vorgesehen ist.

Je tiefer die in dem Riemen vorhandene Nut und der damit korrespondierende Führungssteg der Riemenscheibe ausgebildet sind, desto besser können seitliche Ablaufkräfte des Riemens von der Riemenscheibe und dem Riemen aufgenommen werden, wodurch die seitliche Führung des Riemens verbessert werden kann. Nachteiliger Weise wird der Riemen mit zunehmender Größe der Nut geschwächt, sodass ein Zielkonflikt zwischen einer möglichst geringen Schwächung des Riemens durch die Nut und einer möglichst guten Seitenführung, d. h. der Übertragung möglichst großer Querkräfte, vorherrscht.

Insbesondere stellt es sich als nachteilig heraus, dass der Zahnriemen im Bereich der Nut keine Kraft in Längsrichtung übertragen kann. Zur Kompensation der durch die Nut verringerten Leistungsübertragungsfähigkeit muss die Breite des Zahnriemens um die Breite der Nut zunehmen.

Der Erfindung liegt die Aufgabe zugrunde, einen Zahnriementrieb bereitzustellen, der den Zielkonflikt einer geringen Schwächung des Riemens durch ein Führungselement und einer möglichst guten Seitenführung löst, wobei der Zahnriemen in Zusammenwirken mit einer Riemenscheibe seitlich zwangsgeführt werden kann. Der Zahnriemen soll hierbei nicht oder zumindest in geringerem Maße als durch den Stand der Technik bekannt in seiner Leistungsübertragungsfähigkeit eingeschränkt werden. Zusätzlich soll der Zahnriemen bzw. der Zahnriementrieb eine möglichst geringe Baubreite aufweisen.

Die Lösung dieser Aufgabe ergibt sich durch einen Zahnriementrieb mit den Merkmalen des unabhängigen Anspruchs 1.

Weitere vorteilhafte Ausbildungen sind in den abhängigen Ansprüchen, der allgemeinen Beschreibung sowie den Ausführungsbeispielen zu entnehmen.

Die vorliegende Erfindung betrifft einen Zahnriementrieb mit einem Zahnriemen und wenigstens einer ersten Zahnscheibe, wobei der Zahnriemen auf einer Antriebsseite sich im Wesentlichen in Querrichtung erstreckende Zähne aufweist. Die Antriebsseite des Zahnriemens weist zumindest im Bereich der Zähne ein in Längsrichtung verlaufendes Führungselement auf. Die Zahnscheibe, auch Riemenscheibe genannt, weist sich im Wesentlichen in Querrichtung erstreckende Zähne und wenigstens ein Führungselement auf. Die Antriebsseite des Zahnriemens ist mit der wenigstens ersten Zahnscheibe korrespondierend in Eingriff, wodurch der Zahnriemen in Querrichtung führbar ist. Das Führungselement des Zahnriemens und das Führungselement der Zahnscheibe weisen Elemente zur Übertragung einer Kraft in Längsrichtung auf.

Zur weiteren Vermeidung der Drall- oder Ablaufneigung des gesamten Zahnriemens weist der Zahnriemen in Längsrichtung verlaufende Festigkeitsträger auf, wobei die Litzen der im Zahnriemen nebeneinander liegenden Festigkeitsträger abwechselnd oder gruppenweise abwechselnd im S-Schlag und im Z-Schlag umeinandergedreht sein können. Die Festigkeitsträger erhöhen die Steifigkeit des Zahnriemens in Längsrichtung und verbessern die Kraftübertragungsfähigkeit des Zahnriemens.

Der Zahnriemen des Zahnriementriebs kann gerad- oder schrägverzahnt sein. Insbesondere eine Schrägverzahnung, bei der die Zähne des Zahnriemens um einen Winkel in Bezug auf die Querrichtung schräg verlaufend angeordnet sind, sich jedoch im Wesentlichen in Querrichtung erstrecken, kann zur Reduzierung der Geräuschemissionen vorteilhaft sein. Jedoch wird durch die Schrägverzahnung eine zusätzliche Querkraftkomponente hervorgerufen, die ein seitliches Ablaufen des Zahnriemens von der Zahnscheibe begünstigen kann, weshalb die Führung des Zahnriemens in Querrichtung insbesondere bei schrägverzahnten Zahnriemen besonders bedeutend sein kann.

Jedoch können auch Zahnriemen mit einer Geradverzahnung, bei der die Zähne des Zahnriemens quer zur Längsrichtung angeordnet sind, zu einem seitlichen Ablaufen von der Zahnscheibe tendieren, weshalb eine Führung des Zahnriemens in Querrichtung erforderlich sein kann.

Der erfindungsgemäße Zahnriementrieb kann zwei oder mehr Zahnscheiben aufweisen, wobei es ausreichend sein kann, nur eine der Zahnscheiben mit dem Führungselement auszubilden. Optional können mehrere oder sogar alle der Zahnscheiben des Zahnriementriebs mit dem Führungselement ausgebildet sein. Besonders bevorzugt kann das Führungselement an der Zahnscheibe mit dem kleinsten Durchmesser und bzw. oder mit dem kleinsten Umschlingungswinkel des Zahnriemens um die Zahnscheibe und bzw. oder der angetriebenen Zahnscheibe angeordnet sein.

Die erste Zahnscheibe weist eine analog zu der Verzahnung des Zahnriemens ausgebildete umfangsseitig angeordnete Verzahnung auf, die dazu ausgebildet ist, mit der Verzahnung des Zahnriemens korrespondierend ineinanderzugreifen. Ebenso weist die Zahnscheibe ein zu dem Führungselement des Zahnriemens korrespondierendes Führungselement auf. Die Verzahnung und das Führungselement der Zahnscheibe ist das negative Abbild der Verzahnung und des Führungselements des Zahnriemens, und umgekehrt.

Das Führungselement des Zahnriemens oder der Zahnscheibe kann als eine Auskragung bzw. als ein Vorsprung oder als eine Ausnehmung bzw. eine Nut ausgebildet sein.

Das Führungselement des Zahnriemens ist auf der Antriebsseite zumindest im Bereich der Zähne in Längsrichtung verlaufend angeordnet. Mit anderen Worten teilt das Führungselement die Zähne des Zahnriemens in ein linkes Zahnsegment und ein rechtes Zahnsegment auf. Optional kann sich das Führungselement auch zwischen zwei Zähnen des Zahnriemens erstrecken, wodurch die Wirksamkeit der seitlichen Führung verstärkt werden kann. Das Führungselement kann verschiedene Geometrien aufweisen und beispielsweise keilförmig, halbrund oder rechteckig ausgebildet sein.

Vorzugsweise beträgt die Ausdehnung des Führungselements in vertikaler Richtung, d.h. in einer Richtung quer zur Längsrichtung und quer zur Querrichtung, maximal der Höhe des Zahns des Zahnriemens, besonders bevorzugt 50 % der Zahnhöhe. Die minimale Ausdehnung des Führungselements in vertikaler Richtung kann ganz besonders bevorzugt 1,5 mm betragen. So kann der Zahnriemen in Zusammenwirken mit der korrespondierenden Zahnscheibe in Querrichtung wirksam geführt werden, ohne den Zahnriemen in seinen mechanischen Eigenschaften für die Anwendung spürbar nachteilig zu beeinflussen.

Das Führungselement des Zahnriemens und das Führungselement der Zahnscheibe weisen Elemente zur Kraftübertragung auf, wenn der Zahnriemen und die Zahnscheibe miteinander in Eingriff stehen. Die Elemente zur Kraftübertragung können analog der Geometrie der Zähne des Zahnriemens und bzw. oder der Zahnscheibe ausgebildet sein oder geometrisch andersartig ausgebildete Vorsprünge, Zähne oder Rippen sein. Die Elemente zur Kraftübertragung des Führungselements des Zahnriemens bilden das negative Abbild der Elemente zur Kraftübertragung des Führungselements der Zahnscheibe und umgekehrt und können daher zur formschlüssigen Kraftübertragung miteinander korrespondierend in Eingriff stehen. Das Führungselement des Zahnriemen kann in Zusammenwirken mit dem Führungselement der Zahnscheibe sowohl Längskräfte als auch Querkräfte formschlüssig übertragen.

Es stellt sich als besonders vorteilhaft heraus, dass das Führungselement neben der Funktion der Führung des Zahnriemens in Querrichtung zusätzlich eine Kraft in Längsrichtung übertragen kann. Mit anderen Worten kann das Führungselement des Zahnriemens in Zusammenwirken mit der Zahnscheibe zusätzlich eine Leistung übertragen. Das Führungselement reduziert die Leistungsübertragungsfähigkeit des Zahnriemens somit nicht oder zumindest nur in geringfügigem Maße. Der Zahnriemen kann im Vergleich zu Zahnriemen mit bekannten Nuten oder Federn zur Lateralführung entweder bei vergleichbarer Leistungsübertragung eine geringere Breite aufweisen oder bei identischer Breite eine höhere Leistung übertragen.

Die vorliegende Erfindung betrifft weiterhin einen Zahnriemen zur Verwendung in einem erfindungsgemäßen Zahnriementrieb.

Gemäß einem weiteren Aspekt der vorliegenden Erfindung ist das Führungselement als eine Ausnehmung oder eine Auskragung ausgebildet. Aus fertigungstechnischen Gründen ist das Führungselement des Zahnriemens vorzugsweise als eine Ausnehmung, z. B. eine Nut ausgebildet. Der Zahnriemen kann in dieser erfindungsgemäßen Ausbildung mit konventionellen Mitteln hergestellt werden und nach der Herstellung durch nachträgliches Einbringen der Ausnehmung bearbeitet werden. Die Herstellung eines Zahnriemens mit einer Ausnehmung als Führungselement ist besonders kostengünstig zu realisieren. Alternativ kann das Führungselement auch während der Herstellung des Zahnriemens eingebracht werden. Insbesondere bei in einem Gießverfahren hergestellten Zahnriemen aus Polyurethan kann das Führungselement durch entsprechende Hinterschneidungen oder Vorsprünge in der Form besonders einfach und in der Geometrie flexibel realisiert werden.

Gemäß einem weiteren Aspekt der vorliegenden Erfindung ist das Führungselement in Querrichtung mittig des Zahnriemens angeordnet. Mit anderen Worten ist das Führungselement in Umfangsrichtung oder Längsrichtung verlaufend und in Querrichtung betrachtet auf halber Breite des Zahnriemens angeordnet.

Das Führungselement kann zusätzlich symmetrisch zu einer in Bezug auf die Antriebsseite lotrechten Achse ausgebildet sein.

Durch die symmetrische Ausbildung des Zahnriemens kann auf vorteilhafte Weise in Querrichtung nach links und bzw. oder in Querrichtung nach rechts eine gleich große Lateralkraft übertragen werden.

Gemäß einem weiteren Aspekt der vorliegenden Erfindung sind die Elemente zur Kraftübertragung in zumindest einer Längsrichtung zur formschlüssigen Kraftübertragung ausgebildet.

Das Element zur Kraftübertragung kann so ausgebildet sein, dass es nur in einer in Längsrichtung oder in Umfangsrichtung oder in Rotationsrichtung ausgebildeten Vorzugsrichtung zur formschlüssigen Kraftübertragung ausgebildet ist. Hierdurch kann durch das Führungselement eine möglichst große Kraft in einer bestimmten Vorzugsrichtung formschlüssig übertragen werden.

Alternativ kann das Element zur Kraftübertragung auch so ausgebildet sein, dass es in beiden Längsrichtungen oder in beiden Umfangsrichtungen oder in beiden Rotationsrichtungen zur formschlüssigen Kraftübertragung ausgebildet ist. Das Element zur Kraftübertragung kann also bezogen auf eine durch einen Zahn des Zahnriemens in Querrichtung verlaufende Linie symmetrisch ausgebildet sein. So kann in beide Längsrichtungen, sowohl in Vorzugsrichtung als auch im Reversierbetrieb des Zahnriementriebs, eine gleich große Kraft durch das Führungselement übertragen werden.

Die Erfindung betrifft außerdem eine Zahnscheibe zur Verwendung in einem erfindungsgemäßen Zahnriementrieb.

Gemäß einem weiteren Aspekt der vorliegenden Erfindung erstreckt sich das Führungselement der Zahnscheibe in Umfangsrichtung zwischen zwei Zähnen der Zahnscheibe. So können seitliche Kräfte zur Führung des Zahnriemens auf vorteilhafte Weise im Bereich der Zähne des Zahnriemens eingeleitet werden. Da der Zahnriemen im Bereich der Zähne die größte Stabilität aufweist, kann eine seitliche Führung des Zahnriemens über Führungselemente der Zahnscheibe zwischen zwei Zähnen der Zahnscheibe auch bei hohen Querkräften sichergestellt werden.

Gemäß einem weiteren Aspekt der vorliegenden Erfindung ist das Führungselement der Zahnscheibe in Querrichtung mittig der Zahnscheibe angeordnet.

Mit anderen Worten ist das Führungselement in Umfangsrichtung oder Längsrichtung verlaufend und in Querrichtung betrachtet auf halber Breite der Zahnscheibe angeordnet.

Das Führungselement kann zusätzlich symmetrisch zu einer in Bezug auf eine Antriebsseite bzw. die Mantelfläche der Zahnscheibe lotrechten Achse ausgebildet sein.

Durch die symmetrische Ausbildung der Zahnscheibe kann auf vorteilhafte Weise in Querrichtung nach links und bzw. oder in Querrichtung nach rechts eine gleich große Lateralkraft übertragen werden.

Die Anmeldung betrifft weiterhin ein Fahrzeug, vorzugsweise ein Zweirad mit einem erfindungsgemäßen Zahnriementrieb. Insbesondere bei Fahrrädern mit Zahnriemenantrieben kommt der Zwangsführung eine große Bedeutung zu, da dynamische Kräfte zu Verwindungen im Fahrradrahmen führen können, wodurch sich die Ausrichtung der Riemenscheiben zueinander verändert und Querkräfte auf den Riementrieb übertragen werden können. Ein seitlich geführter Zahnriemen ist demzufolge insbesondere bei Fahrradantrieben besonders vorteilhaft. Die zuvor genannten Eigenschaften und Vorteile lassen sich auch auf ein Motorrad sowie dessen Derivate mit einem erfindungsgemäßen Riementrieb übertragen.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand des Anspruchs 1 kombinierbar sind. Der Zahnriementrieb kann einen Zahnriemen und eine Zahnscheibe mit den zuvor erläuterten vorteilhaften erfindungsgemäßen Merkmalen aufweisen.

Anhand der Zeichnungen werden im Folgenden Ausführungsbeispiele der Erfindung schematisch dargestellt und näher erläutert.
Fig. 1 zeigt eine schematische abschnittsweise Darstellung eines erfindungsgemäßen Zahnriemens gemäß eines ersten Ausführungsbeispiels in einer Draufsicht.
Fig. 2 zeigt eine schematische abschnittsweise Darstellung des Zahnriemens aus

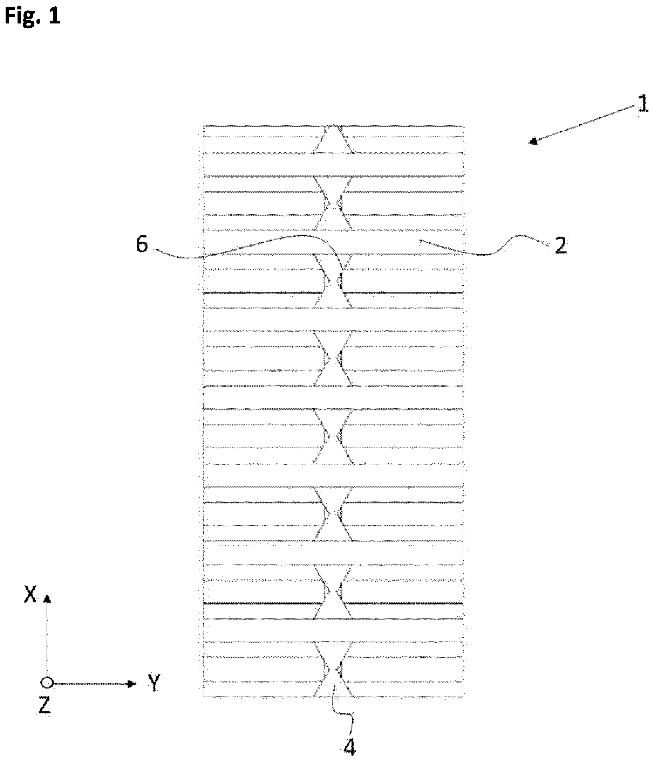

Figur 1 in einer perspektivischen Darstellung.

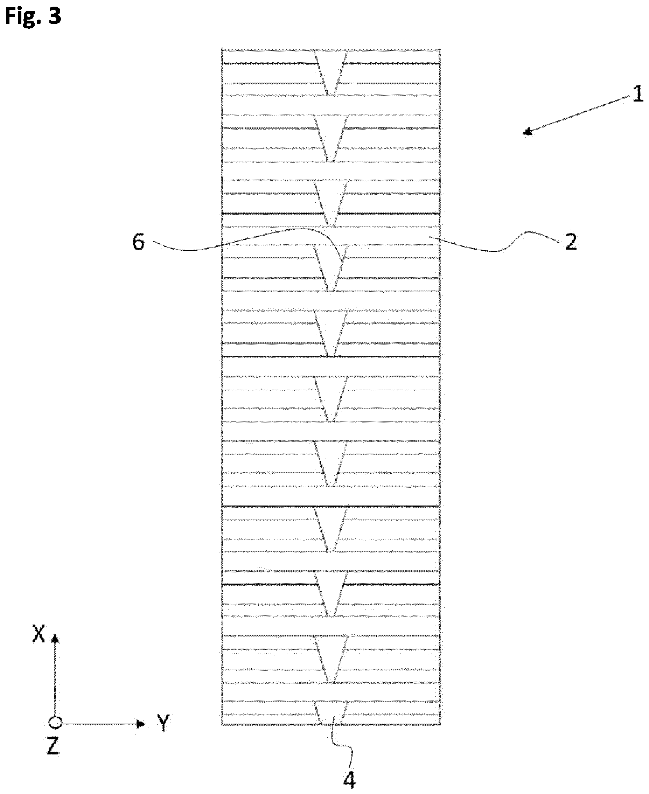

Fig. 3 zeigt eine schematische abschnittsweise Darstellung eines erfindungsgemäßen Zahnriemens gemäß eines zweiten Ausführungsbeispiels in einer Draufsicht.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden. Die Längsrichtung X und die Querrichtung Y bilden gemeinsam die Horizontale, X, Y, welche auch als horizontale Ebene X, Y bezeichnet werden kann. Die Längsrichtung X, die Querrichtung Y und die vertikale Richtung Z können gemeinsam auch als Raumrichtungen X, Y, Z bzw. als kartesische Raumrichtungen X, Y, Z bezeichnet werden. Die Längsrichtung X ist mit einer Umfangsrichtung U gleichgerichtet.

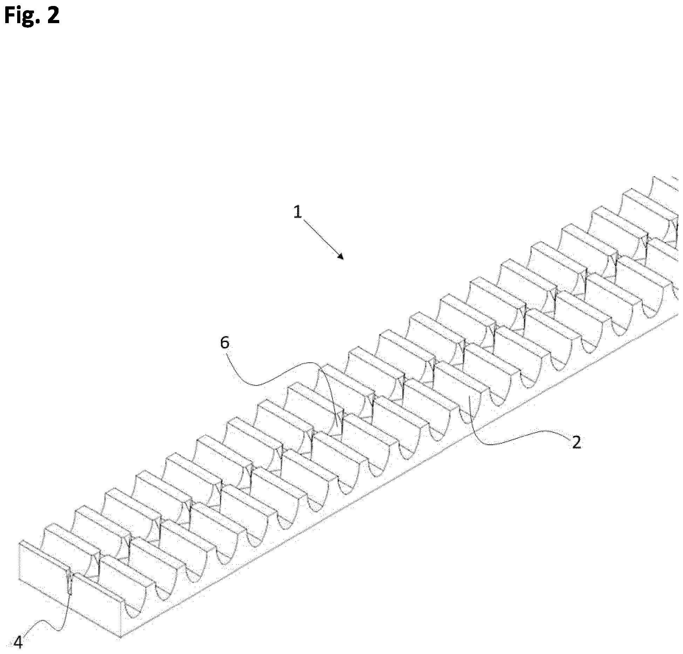

Der in Figur 1 dargestellte Zahnriemen 1 ist in einem ersten Ausführungsbeispiel in einer Draufsicht auf eine Antriebsseite 2 schematisch dargestellt. Der Zahnriemen 1 des ersten Ausführungsbeispiels aus Figur 1 ist in der Figur 2 perspektivisch dargestellt. Der Zahnriemen 1 weist in dem dargestellten Ausführungsbeispiel der Figur 1 einen Grundkörper aus Polyurethan auf, wobei in dem Grundkörper mehrere parallel zueinander angeordnete und sich in Längsrichtung X erstreckende Festigkeitsträger aus Aramid angeordnet sind.

Der Zahnriemen 1 weist weiterhin ein auf der Antriebsseite 2 in Längsrichtung X verlaufendes Führungselement 4 in Form einer Ausnehmung auf, wobei das Führungselement 4 in Querrichtung Y mittig des Zahnriemens 1 angeordnet ist.

Die Antriebsseite 2 des Zahnriemens 1 kann mit der Außenkontur einer Zahnscheibe oder Riemenscheibe korrespondierend in Eingriff stehen. Die Antriebsseite 2 bildet das Negativprofil der Außenkontur der Zahnscheibe und umgekehrt. In Zusammenwirken des Zahnriemens 1 mit der Zahnscheibe kann durch das Führungselement 4 in Querrichtung Y nach links und bzw. oder in Querrichtung Y nach rechts ein zusätzlicher Formschluss erzielt werden, wodurch eine Seitenkraft bzw. Lateralkraft durch den Zahnriemen 1 übertragen werden kann, sodass ein seitliches Ablaufen des Zahnriemens 1 von der Zahnscheibe vermieden werden kann.

Zusätzlich weist das Führungselement 4 Elemente zur Kraftübertragung 6 auf. Durch den korrespondierenden Eingriff des Führungselements 4 des Zahnriemens 1 mit dem Führungselement der Zahnscheibe kann das Führungselement durch die Elemente zur Kraftübertragung 6 eine zu der Kraft in Querrichtung Y zusätzliche Kraft in Längsrichtung X übertragen werden. Die Elemente zur Kraftübertragung 6 sind in dem in den Figuren 1 und 2 dargestellten ersten Ausführungsbeispiel bezogen auf eine durch den Zahn des Zahnriemens in Querrichtung Y verlaufende Linie symmetrisch ausgebildet. Das Führungselement 4 kann durch die symmetrische Ausbildung der Elemente zur Kraftübertragung 6 eine Längskraft in positiver Längsrichtung X und bzw. oder in negativer Längsrichtung X übertragen.

Ein zweites Ausführungsbeispiel des erfindungsgemäßen Zahnriemens 1 ist schematisch in Figur 3 dargestellt. Im Unterschied zu dem ersten Ausführungsbeispiel der Figuren 1 und 2 ist das Element zur Kraftübertragung 6 so ausgebildet, dass das Führungselement 4 nur zu einer formschlüssigen Kraftübertragung in einer Vorzugsrichtung in Längsrichtung X oder in Umfangsrichtung U ausgebildet ist. Hierdurch kann durch das Führungselement 4 im Vergleich zu dem ersten Ausführungsbeispiel eine in einer Vorzugsrichtung größere Kraft formschlüssig übertragen werden.

### Bezugszeichenliste (Teil der Beschreibung)

- 1: Zahnriemen
- 2: Antriebsseite
- 4: Führungselement des Zahnriemens
- 6: Element zur Kraftübertragung des Führungselements des Zahnriemens

- U: Umfangsrichtung
- X: Längsrichtung; Tiefe
- Y: Querrichtung; Breite
- Z: vertikale Richtung; Höhe
- Y: X, Horizontalen; horizontale Ebene

## Patentansprüche

1. Zahnriementrieb mit einem Zahnriemen (1) und wenigstens einer ersten Zahnscheibe,
wobei der Zahnriemen (1) auf einer Antriebsseite (2) sich im Wesentlichen in Querrichtung (Y) erstreckende Zähne aufweist,
wobei die Antriebsseite (2) zumindest im Bereich der Zähne ein in Längsrichtung (X) verlaufendes Führungselement (4) aufweist,
wobei die Zahnscheibe sich im Wesentlichen in Querrichtung (Y) erstreckende Zähne und wenigstens ein Führungselement aufweist,
wobei die Antriebsseite (2) des Zahnriemens (1) mit der wenigstens ersten Zahnscheibe korrespondierend in Eingriff ist, wodurch der Zahnriemen (1) in Querrichtung (Y) führbar ist,
**dadurch gekennzeichnet, dass**
das Führungselement (4) des Zahnriemens (1) und das Führungselement der Zahnscheibe Elemente (6) zur Übertragung einer Kraft in Längsrichtung (X) aufweisen.

2. Zahnriemen (1) zur Verwendung in einem Zahnriementrieb nach Anspruch 1.

3. Zahnriemen (1) nach Anspruch 2,
**dadurch gekennzeichnet, dass**
das Führungselement (4) als eine Ausnehmung oder eine Auskragung ausgebildet ist.

4. Zahnriemen (1) nach einem der Ansprüche 2 bis 3,
**dadurch gekennzeichnet, dass**
das Führungselement (4) in Querrichtung (Y) mittig des Zahnriemens (1) angeordnet ist.

5. Zahnriemen (1) nach einem der Ansprüche 2 bis 4,
**dadurch gekennzeichnet, dass**
die Elemente zur Kraftübertragung (6) in zumindest einer Längsrichtung (X) zur formschlüssigen Kraftübertragung ausgebildet ist.

6. Zahnscheibe zur Verwendung in einem Zahnriementrieb nach Anspruch 1.

7. Zahnscheibe nach Anspruch 6,
**dadurch gekennzeichnet, dass**
das Führungselement sich in Umfangsrichtung (U) zwischen zwei Zähnen der Zahnscheibe erstreckt.

8. Zahnscheibe nach einem der Ansprüche 6 bis 7,
**dadurch gekennzeichnet, dass**
das Führungselement der Zahnscheibe in Querrichtung (Y) mittig der Zahnscheibe angeordnet ist.

9. Fahrzeug, vorzugsweise Zweirad mit einem Zahnriementrieb nach Anspruch 1.
